# Europäisches Patentamt
## European Patent Office
## Office européen des brevets

(19)

(11) Veröffentlichungsnummer: **0 026 440**
**B1**

(12) ## EUROPÄISCHE PATENTSCHRIFT

(45) Veröffentlichungstag der Patentschrift: **19.12.84**

(21) Anmeldenummer: **80105728.2**

(22) Anmeldetag: **24.09.80**

(51) Int. Cl.³: **C 05 F 13/00, C 05 F 9/00**

(54) **Verfahren zum Gewinnen von Bodenverbesserungsmitteln.**

(30) Priorität: **27.09.79 DE 2939229**

(43) Veröffentlichungstag der Anmeldung:
**08.04.81 Patentblatt 81/14**

(45) Bekanntmachung des Hinweises auf die
Patenterteilung:
**19.12.84 Patentblatt 84/51**

(84) Benannte Vertragsstaaten:
**AT BE CH DE FR GB IT LI LU NL SE**

(56) Entgegenhaltungen:
**AT-B- 49 563**
**AT-B- 262 338**
**DE-A-2 352 474**
**DE-A-2 628 772**
**DE-A-2 642 451**
**DE-B-1 145 646**
**DE-B-1 171 362**
**FR-A-2 119 808**

(73) Patentinhaber: **Industrie-Werke Karlsruhe Augsburg Aktiengesellschaft Gartenstrasse 71 D-7500 Karlsruhe 1 (DE)**

(72) Erfinder: **Hartmann, Randolph, Dr.-Ing. Unterer Lussweg 7 D-7500 Karlsruhe (DE)**
Erfinder: **Schriewer, Helmut, Ing. grad. Pommernstrasse 7 D-6729 Maximiliansau (DE)**

(74) Vertreter: **Lemke, Jörg-Michael, Dipl.-Ing. Wolframstrasse 9 D-8900 Augsburg (DE)**

Courier Press, Leamington Spa, England.

EP 0 026 440 B1

**Beschreibung**

Die Erfindung betrifft ein Verfahren zum Gewinnen von Bodenverbesserungsmitteln, sowie zum Nutzen deren innerer Energie aus Abfallstoffen unter gleichzietigem Reduzieren des Abfallvolumens, wobei zunächst Preßlinge aus Müll-Klärschlamm-Gemisch einer Intensivrotte unterworfen werden, wodurch der Wassergehalt von ursprünglich etwa 50 bis 60 % auf etwa 30 %, vorzugsweise jedoch etwa 20 %, verringert wird, und anschließend zerkleinert werden.

Sowohl der gesteigerte Anfall von Müll unterschiedlicher Art und Herkunft als auch des gesteigerte Umweltbewußtsein der Bevölkerung lassen die Grenzen der derzeit bekannten Müll-Beseitigungsverfahren erkennen. Diese Grenzen lassen sich besonders deutlich am Beispiel von Mülldeponien darstellen; Deponien sind an sich die einfachste und insoweit auch billigste Art der Abfallbeseitigung. Infolge der unabweisbaren Beachtung gesetzlicher Vorschriften und sonstiger Auflagen zum Schutze von Menschen, Tieren und Umwelt wird der Unterhalt von Deponien für die Betreiber, z. B. Kommunen, zusehends schwieriger. Damit einher geht die Verknappung geeigneter Areale zur Errichtung von Deponien. Auch werden die Entfernungen zwischen den Deponien und den von Müll zu entsorgenden Siedlungsgebieten immer größer. Ferner wird auch der Kostenaufwand für Umwelt-Schutzmaßnahmen, etwa zur Vermeidung von Grundwasser-Verungreinigungen, wenn Folge- oder Spätchäden ausgeschlossen bleiben sollen, ständig höher. Weitere Nachteile bestehen darin, daß Deponien Ungeziefer anziehen, die Ursache von Seuchenherden bilden, und außerdem infolge von Fäulnisvorgängen Methangasexplosionen oder dergleichen hervorrufen können, welche wiederum zu Deponie-Bränden föhren. Schließlich gehen durch das Ablagern von Abfällen wertvolle, unsortierte Rohstoffe verloren, statt wieder einem naturgemäßen und umweltfreundlichen Kreislauf zugeführt zu werden.

Auch dem Kompostieren von Müll oder Müll-Klärschlamm-Gemischen sind Bezuglich der Anschließenden, Raum beanspruchenden Lagerung natürliche Grenzen gesetzt, wenngleich sich Kompostierungs-Verfahren an sich durchaus bewährt habe. Ein solches Verfahren ist in der DE—Patentschrift 11 45 646 beschrieben:

Mit seiner Hilfe lassen sich lagerbeständige, weitgehend geruchlose und biologisch aktive Bodenverbesserungsmittel durch Aufbereitung, Rotte und dabei Trocknung von Gemischen aus Müll und Klärschlamm herstellen. In getrocknetem Zustand sind die Preßlinge unbegrenzt haltbar. Zum Gebrauch werden sie etwa wie Torfmull in Ballen behandelt, d. h. aufgerissen, und stellen dann, entsprechend angefeuchtet, ein Material, dar das zu allen Kompostierungszwecken verwendet werden kann, beispielsweise zur Verteilung auf Gartenbeeten. Dabei wird keineswegs eines Zerkleinerung der Bestandteile des Ballens bzw. hier Preßlings angestrebt.

Ferner ist es aus der AT—Patentschrift 262 338 bekannt, zwei Fraktionen aus städtischem Abfallmaterial zu verwenden, nämlich zur Bodenverbesserung das Material von genügend reduzierter Dimension und zem Verbrennen das gesammte Restmaterial. Eine Siebung erfolgt hier jedoch vor jeder kompostierung bzw. Rotte, woraufhin dann erst der Feinanteil einer Verrottung zugeführt wird, während, der Grobanteil verbrannt wird, und die Verbrennungsrückstände der Kompostmasse einverleibt werden.

Angesichts dieser der bekannten Verfahrensweise vorgegebenen Grenzen hat sich die vorliegende Erfindung die Aufgabe gestellt, ein Verfahren zu schaffen, das in seiner Vielseitigkeit geeignet ist, die Erfordernisse kommunaler und/oder industrieller Abfallarten zu berücksichtigen, Fertigkompost zur Verfügung zu stellen und Energie oder Heizgas bzw. andere Spaltprodukte zu liefern, abgesehen von der ebenfalls erreichbaren Volumenreduzierung.

Gelöst wird dieses Aufgabe unter Weiterbildung des Verfahrens der eingangsgenannten Art dadurch, daß die getrockneten und lagerfähigen Preßlinge gemahlen und anschließend abgesiebt werden, wobei die abgesiebte Feinfraktion unmittelbar als Bodenverbesserungsmittel verwundbar ist, und daß die gemahlenen und abgesiebten Preßlinge anschließend durch Verschwelen oder Verbrennen thermisch behandelt werden, wobei nur die den Sieboberlauf ausmachende Grobfraktion entweder direkt oder erst nach erneutem Verpressen thermisch behandelt wird.

Die eingangs genannte Druckschrift nennt zwar bereits das Verbrennen der Preßlinge selber, jedoch wird der Wirkungsgrad sowohl des Verbrennens als auch des im vorliegenden Zusammenhang noch nicht bekannten Verschwelens durch das erfindungsgemäße Vermahlen und Absieben wesentlich verbessert. Es hat sich nämlich gezeigt, daß die doch eine ganz erhebliche Große aufweisenden Preßlinge nach der eingangs genannten Druckschrift ohne diese Maßnahmen bei der relativ kurzen Verweilzeit in einem Verbrennungsofen nut unvollständig verbrannt werden.

Der Begriff "Verschwelen" bedarf im Zusammenhang mit der Abfallbeseitigung noch einiger Erläuterung:

Während das Verbrennen eine Reaktion eines oxidierbaren meist organischen Stoffes bei erhöhter Temperatur mit Sauerstoff ist, versteht man unter "Verschwelen" eine thermische Zersetzungsreaktion eines Stark kohlenstoffhaltigen Produkts bei erhöhter Temperatur unter Ausschluß von Sauerstoff.

Das Verschwelen bzw. die pyrolytische Behandlung fester Abfälle erfolgt nach drei Gesichtspunkten, nämlich:

1.0 Zwecks ausschließlicher Abfallbeseitigung, d. h. zur möglichst großen Reduktion von Gewicht und Volumen der Abfälle, ohne jegliche Verwertung:

2.0 zum Gewinnen von Heizgas;

3.0 zum Gewinnen anderer Produkte.

Ausschlaggebend für eine Auswahl aus diesen Gesichtspunkten sind vor allem Art und Zusammensetzung der zu verschwelenden abfälle.

Unter dem Begriff "Siebreste" werden hier vor allem schwer abbaubare organische und für Zwecke des Kompostierens nicht geeignete Bestandteile verstanden, so etwa Kunstoffe, Textilen, Papier, Pappe und Holz, um nur einige wenige zu nennen.

Mit der Erfindung geht eine Reihe von Vorteilen einher:

Die thermische Behandlung getrockneter und lagerfähiger Preßlinge nach vorausgegangenem Vermahlen und Absieben durch Verschwelen (Pyrolyse) oder Verbrennen läßt eine optimale und zugleich auch wirtschaftliche Weiterverarbeitung von Müll-Klärschlamm-Gemisch-Preßlingen nach der DE—PS 11 45 646 zu. Zunächst einmal ist bereits unter Einschluß der Siebreste durch biologische Trocknung der mit relativ hohem Wassergehalt belasteten Ausgangsmaterialien der Gehalt an freiem Wasser erheblich reduziert. Ferner ermöglicht das Vermahlen und Sieben in überraschender Weise ein sehr einfache Trennung derjenigen Bestandteile der gerotteten Preßlinge, die einen besonders hohen Energieinhalt haben, von denjenigen, die diesen eben nicht aufweisen. Der energiereichere Teil, die sogenannte Grobfraktion, somit nicht oder nur unvollständig abgebaute organische Bestandteile, wird bzw. werden dem Verschwelen bzw. der Verbrennung zugeführt. Als besonderer Vorteil erweist sich dabei, daß die abgesiebte Fraktion bzw. Feinfraktion nicht nur den geringeren Energieinhalt aufweist, sondern gerade infolge ihres weitgehenden Abbaus bzw. ihrer weitgehenden Verrottung wegen ihres hohen Anteils an mineralischen Stoffen am wertvollsten als Bodenverbesserungsmittel ist.

Darus folgt weiterhin, daß sich die Führung des Verfahrens nach der Erfindung sehr einfach an die jeweiligen Bedürfnisse des Marktes anpassen läßt. In Zeiten großen Bedarfs an Bodenverbesserungsmitteln wird man nur die größen Bestandteile der Grobfraktion einer Verschwelung oder Verbrennung zuführen, während der größte Teil des Kompostes nach der Intensivrotte der Kompostaufbereitung zugeführt und als Bodenverbesserungsmittel Verwendet wird. In Zeiten geringeren Bedarfs an Kompost bzw. an Bodenverbesserungsmitteln läßt sich ein größer Anteil an dem gemahlenen Preßlingen der Grobfraktion zuschlagen und dem Verschwelen bzw. Verbrennen zuführen, beispielsweise durch Verkleinerung der Siebweite. Grenzwert ist hier natürlich die Verwendung des gesamten Produkts der Intensivrotte (siehe Zeichnung) für diese Zwecke.

Schließlich wird mit der vorgeschlagenen Erfindung das Problem der Siebrestbeseitigung durch maximale Volumen-Reduktion ebenso sinnvoll gelöst wie das Problem der gemeinsamen Verarbeitung und gegebenenfalls Beseitigung von Müll und Klärschlamm.

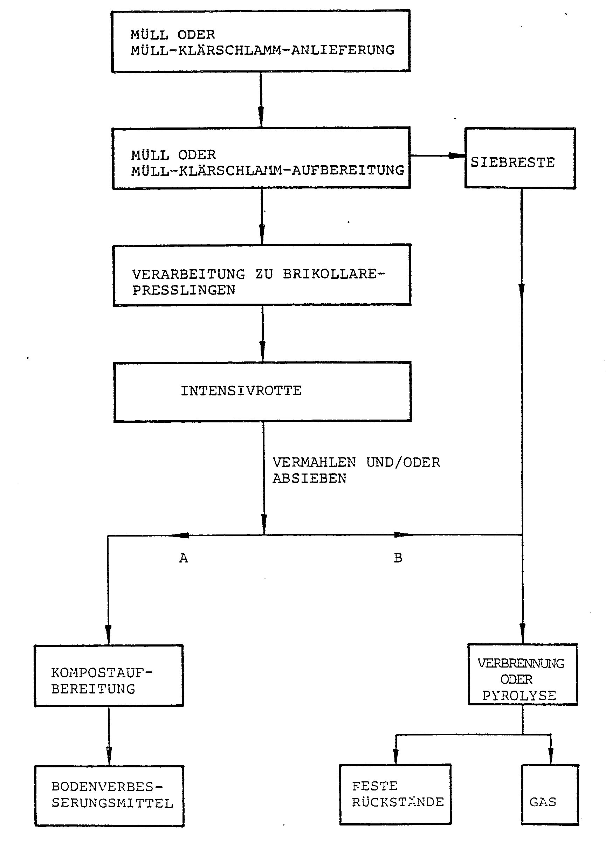

In der Zeichnung ist die Erfindung anhand eines Ablaufschemas dargestellt. Das Schema zeigt dabei sowohl den bekannten, in der DE—Patentschrift 11 45 646 vorgeschlagenen Verfahrensablauf, als auch den Weiterbildenden Verfahrensablauf nach der vorliegenden erfindung.

In beiden Fällen werden Müll und Klärschlamm nach Anlieferung zunächst aufbereitet und hernach, unter Benutzung einer — nicht dargestellten — Presse zu Preßlingen verarbeitet. Die derart herstellten Preßlinge werden schließlich in Stapeln oder dergleichen einem intensiven Rotteprozeß unterworfen.

Bei Realisierung des der vorliegenden Erfindung zugrundeliegenden Verfahrens ist der Ablauf der Müll- oder Müll-Klärschalmm-Anlieferung, -Aufbereitung, -Preßlingsherstellung und der Intensivrotte dem bekannten Verfahren gleich. Nach dem Verfahrensschritt der Intensivrotte erfolgt nun allerdings das Vermahlen und Absieben sowie anschließend die thermische Behandlung mittels Verschwelung (Pyrolyse) oder Verbrennung, gegebenenfalls unter gleichzeitigem Zusatz von Siebresten, welche sich bei der Müll- oder Müll-Klärschlamm-Aufbereitung ergeben haben. Die Rückstände nach der erwähnten thermischen Behandlung sind sowohl fester als auch gasförmiger Art.

Vorteilhaft läßt sich die gemahlene und abgesiebte, einen geringeren Energieinhalt aufweisende Feinfraktion unmittelbar als Bodenverbesserungsmittel verwenden, ohne dem Verschwelen oder Verbrennen zugeführt zu werden (siehe Pfeil A), während die den Siebüberlauf bildende, einen höheren Energieinheit aufweisende Grobfraktion entweder direkt oder erst nach erneutem Verpressen durch Verschwelen oder Verbrennen thermisch behandelt wird (siehe Pfeil B), wobei sich durch die erfolgte Zerkleinerung eine bessere Verbrennung ergibt.

Eine aus vorgenommenen Versuchen abgeleitete vereinfachte und lediglich der größenmäßigen Orientierung dienende Stoffbilanz zur Pyrolyse der Preßlinge ergab folgende Werte:

| | |
|---|---|
| Einsatz von Preßlingen (kg) | 1.000 |
| Schweltrommel-Temperatur ($T_{max}$, °C) | ~450 |
| Festrückstände (kg) | ~690 |
| Schwelgas (kg) | ~310 |
| Luft (kg) | ~522 |
| Holz (kg) | ~20 |

| | |
|---|---|
| Gaswandler-Temperatur ($T_{max}$, °C) | ~1.100 |
| Wasser (kg) | ~200 |
| Spaltgas (kg) | ~652 |

## Patentanspruch

Verfahren zum Gewinnen zon Bodenverbesserungsmitteln, sowie zum Nutzen deren innerer Energie aus Abfallstoffen unter gleichzeitigem Reduzieren des Abfallvolumens, wobei zunächst Preßlinge zus Müll-Klärschlamm-Gemisch einer Intensivrotte unterworfen werden, wodurch der Wassergehalt von ursprünglich etwa 50 bis 60 % auf etwa 30 %, vorzugsweise jedoch erwa 20 %, verringert wird, und anschließend zerkleinert werden, dadurch gekennzeichnet, daß die getrockneten und lagerfähigen Preßlinge gemahlen und anschließend abgesiebt werden, wobei die abgesiebte Feinfraktion unmittelbar als Bodenverbesserungsmittel verwendbar ist, und daß die gemahlenen und abgesiebten Preßlinge anschließend durch Verschwelen oder Verbrennen thermisch behandelt werden, wobei nur die den Siebüberlauf ausmachende Grobfraktion entweder direkt oder erste nach erneutem Verpressen thermisch behandelt wird.

## Revendication

Procédé pour la récupération d'amendements du sol, ainsi que pour la mise à profit de leur énergie interne, à partir de déchets, tout en réduisant le volume des déchêts, dans lequel on soumet d'abord des corps obtenus par compression à partir d'un mélange de boues de curage d'ordures ménagères à un rouissage intensif au cours duquel le teneur en eau est réduite à environ 20 pourcent, de préférence toutefois à 20 pourcent environ, à partir d'une valeur initiale de 50 à 60 pourcent, environ, et on concasse ensuite ces corps, caractérisé en ce que l'on moud les corps comprimés séchés et aptes au stockage et qu'on les tamise ensuite, la fraction fine obtenue par tamisage étant immédiatement utilisable en tant qu'amendement du sol, et en ce que l'on soumet ensuite les corps comprimés moulus et tamisés à un traitement thermique par carbonisation ou combustion au cours duquel on ne traite, directement ou après un nouveau pressage, que la fraction grossière retenue par le tamis.

## Claim

A method of producing soil conditioners from waste material, and of utilizing the internal energy thereof, while reducing the volume of the waste material at the same time, wherein initial compacts of a refuse-sewage sludge mixture are subjected to intense rotting whereby the water content thereof is reduced from a value from about 50 to 60 % to about 30 %, however, preferably 20 %, and consecutively are crushed, characterized in that the dried and storable compacts are ground and then screened, the screened-out fine fraction being directly usable as a soil conditioner, and that the ground and screened compacts thereafter are thermally treated by low-temperature carbonization or combustion, whereby the coarse fraction only remaining as oversize on the screen is thermally treated either directly or after being newly compacted.

MÜLL ODER
MÜLL-KLÄRSCHLAMM-ANLIEFERUNG

MÜLL ODER
MÜLL-KLÄRSCHLAMM-AUFBEREITUNG → SIEBRESTE

VERARBEITUNG ZU BRIKOLLARE-
PRESSLINGEN

INTENSIVROTTE

VERMAHLEN UND/ODER
ABSIEBEN

A          B

KOMPOSTAUF-
BEREITUNG

VERBRENNUNG
ODER
PYROLYSE

BODENVERBES-
SERUNGSMITTEL

FESTE
RÜCKSTÄNDE          GAS